# EUROPÄISCHE PATENTSCHRIFT

(11) **EP 2 269 876 B1**
(45) Veröffentlichungstag und Bekanntmachung des Hinweises auf die Patenterteilung: **17.04.2013**
(21) Anmeldenummer: 10166617.0
(22) Anmeldetag: 21.06.2010
(51) Int. Cl.: B60R 19/52, B60R 19/46

(54) **Fahrzeug, insbesondere militärisches Fahrzeug, mit Rammschutz**
Vehicle, in particular military vehicle, with ramming protection
Véhicule, notamment véhicule militaire, avec protection anti-choc

(30) Priorität: 04.07.2009 DE 102009031708
(43) Veröffentlichungstag der Anmeldung: 05.01.2011
(73) Patentinhaber: Krauss-Maffei Wegmann GmbH & Co. KG, 80997 München (DE)
(72) Erfinder: Dieling, Frank, 80997, München (DE); Scheibel, Axel Dr., 80997, München (DE); Prummenbaum, Eric, 23127 Kassel (DE)
(74) Vertreter: Feder Walter Ebert

(56) Entgegenhaltungen:
- JP-A- 2003 054 389
- US-A- 1 871 331

## Beschreibung

Die Erfindung betrifft ein Fahrzeug, insbesondere ein militärisches Fahrzeug, mit einem im Bereich der Fahrzeugfront angeordneten Rammschutzelement.

Insbesondere bei geländegängigen Fahrzeugen ist es bekannt, diese im Bereich der Fahrzeugfront mit einem zum Schutz des Fahrzeugs im Falle von Kollisionen mit beispielsweise Wildtieren dienenden Rammschutzelement zu versehen. Bei bekannten Rammschutzelementen handelt es sich üblicherweise um starre Bügelelemente, die vor der eigentlichen Stoßstange des Fahrzeugs montiert werden, um die Fahrzeugfront im Falle eines Aufpralls vor Beschädigungen zu schützen.

Darüber hinaus ist es ebenfalls vor allem von Geländefahrzeugen bekannt, diese im Bereich der Fahrzeugfront mit einer oftmals elektrisch betriebenen Seilwinde zu versehen. In diesem Zusammenhang hat es sich als nachteilig erwiesen, dass die Winde vorne im Bereich der Fahrzeugfront noch vor der Vorderachse des Fahrzeugs angeordnet ist, was in bestimmten Belastungssituationen zu einem instabilen Stand des Fahrzeugs führen kann. Das Dokument JP 2003 054389 A offenbart ein Fahrzeug nach dem Oberbegriff von Anspruch 1.

**Aufgabe** der Erfindung ist es, ein Fahrzeug der Eingangs genannten Art anzugeben, dessen Standeigenschaften bei Bedarf verbessert werden können.

Diese Aufgabe wird bei einem Fahrzeug der eingangs genannten Art dadurch **gelöst,** dass das Rammschutzelement von einer Rammschutzstellung, in welcher das Rammschutzelement die Fahrzeugfront schützt, in eine Abstützstellung überführbar ist, in welcher das Rammschutzelement eine Abstützung gegenüber der Fahrbahn bildet.

Durch Überführung des Rammschutzelements von der im Fahrbetrieb dem Fahrzeugschutz dienenden Rammschutzstellung in eine Abstützstellung ergeben sich günstigere Standeigenschaften des Fahrzeugs durch einen zusätzlichen, noch vor der Vorderachse liegenden Abstützpunkt. Insbesondere beim Betrieb einer elektrischen Winde verbessert die zusätzliche Abstützung den Stand des Fahrzeugs.

Von konstruktivem Vorteil ist eine Ausgestaltung, nach welcher das Rammschutzelement durch Verschwenken um eine sich im Wesentlichen in horizontaler Richtung erstreckende Schwenkachse von der Rammschutzstellung in die Abstützstellung überführbar ist. Das Verschwenken kann von Hand durch manuelles Herunterklappen erfolgen.

Erfindungsgemäß weist das Rammschutzelement zwei gegeneinander abgewinkelt verlaufende Schenkel auf. Die beiden Schenkel können in der Rammschutzstellung die Frontpartie des Fahrzeugs, beispielsweise dessen Motorhaube, nach Art eines Winkels umgreifen und auf diese Weise einen effektiven Rammschutz bereitstellen. In der Abstützstellung bilden die Schenkel Abstützarme, über welche sich das Fahrzeug über eine vor dessen Vorderachse liegenden Abstützpunkt gegenüber der Fahrbahn abstützt.

Ferner ist konstruktiver Ausgestaltung vorgesehen, dass der erste Schenkel an seinem einen Ende an die Schwenkachse angebunden ist.

Weiter wird vorgeschlagen, dass die Länge des zweiten Schenkels einstellbar ist. Durch Einstellen der Länge des zweiten, der Schwenkachse abgewandten Schenkels kann zum einen eine Arretierung in der Rammschutzstellung erfolgen. Zum anderen kann durch Einstellung der Schenkellänge und anschließende Arretierung eine den jeweiligen Bodengegebenheiten Rechnung tragende Abstützung in der Abstützstellung erfolgen.

Erfindungsgemäß wird eine geneigt gegenüber der Fahrbahn verlaufende Abstützfläche des Fahrzeugs vorgesehen, gegen welche der erste Schenkel des Rammschutzelements in der Abstützstellung anliegt. Auf diese Weise wird das Abstützelement in der Abstützstellung gehalten.

In weiterer Ausgestaltung wird vorgeschlagen, dass der zweite Schenkel an seinem freien Ende ein eine flächige Auflage bereitstellendes Abstützelement aufweist.

Weiter wird vorgeschlagen, dass das Rammschutzelement schwenkbeweglich an im Frontbereich des Fahrzeugs vorgesehenen Zurrösen befestigt ist. Derartige Zurrösen werden vor allem im militärischen Bereich weit verbreitet und in in ihren Abmaßen teilweise genormten Größen verwendet, weshalb die Anbindung des Rammschutzelements an die ohnehin vorgesehenen Zurrösen eine im Hinblick auf die Nachrüstung bereits im Betrieb befindlicher Fahrzeuge mit einem Rammschutzelement günstige Ausgestaltung bildet.

Ebenso ist es von Vorteil, wenn das Rammschutzelement in der Rammschutzstellung an Hebeösen des Fahrzeugs oder an Flanschflächen der Hebeösen befestigt ist.

Weitere Einzelheiten und Vorteile der Erfindung werden nachfolgend unter Zuhilfenahme der beigefügten Zeichnungen erläutert. Darin zeigen
- Fig. 1:: eine perspektivische Ansicht auf den Frontbereich eines Fahr- zeugs mit einem Rammschutzelement,
- Fig. 2:: eine weitere perspektivische Ansicht auf den Frontbereich eines Fahrzeugs mit einem Rammschutzelement, das sowohl in Rammschutzstellung wie auch in Abstützstellung darge- stellt ist,
- Fig. 3:: eine der Darstellung in Fig. 2 entsprechende seitliche Ansicht und

- Fig. 4:: eine der Fig. 3 entsprechende Ansicht mit einer der Veran- schaulichung dienenden Zwischenstellung.

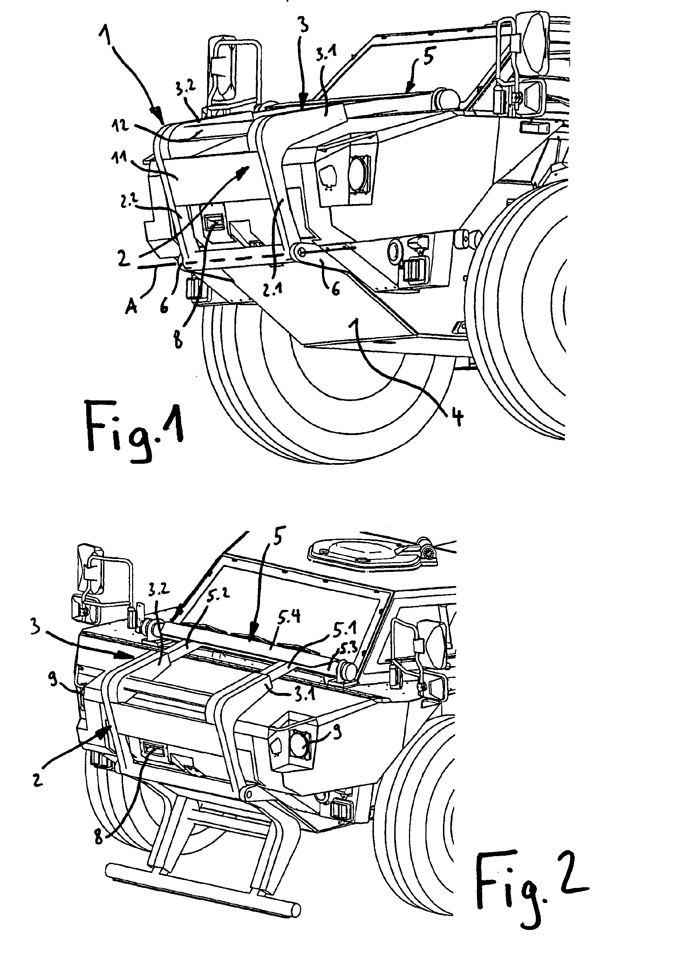

Fig. 1 zeigt den Frontbereich eines geländegängigen Fahrzeugs, welcher über ein Rammschutzelement 1 vor Beschädigungen infolge von Kollisionen geschützt ist. Bei dem Fahrzeug handelt es sich um ein gepanzertes, militärisches Fahrzeug, welches mit einer elektrisch betriebenen Seilwinde 8 versehen ist.

Der Rammschutzbügel 1 ist in der Darstellung der Fig. 1 in seiner Rammschutzstellung dargestellt, in welcher ein erster Schenkel 2 des Rammschutzelements 1 in im Wesentlichen vertikaler Richtung verläuft und der gegenüber dem ersten Schenkel 2 abgewinkelt verlaufende Schenkel 3 des Rammschutzelements 1 sich oberhalb der Motorhaube des militärischen Fahrzeugs in einer nahezu waagerechten Richtung erstreckt.

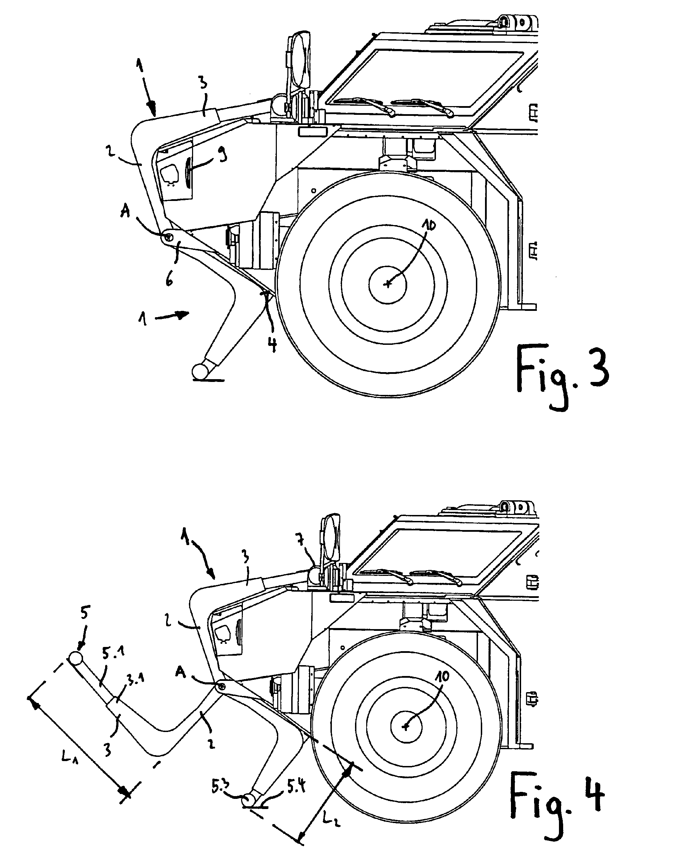

Das Rammschutzelement 1 ist insgesamt nach Art eines Winkels gestaltet, dessen Schenkel 2, 3 aus jeweils zwei Holmen 2.1, 2.2. und 3.1, 3.2 gebildet werden, die über Querverstrebungen 11, 12 miteinander verbunden sind, wobei der zweite Schenkel 3 zusätzlich ein mit zwei Einschubelementen 5.1, 5.2 versehenes Abstützelement 5 aufweist, über welches die Länge des zweiten Schenkels 3 einstellbar ist, vgl. auch Fig. 2. Die Einschubelemente 5.1, 5.2 sind nach Art von Teleskopschienen in die Holme 3.1, 3.2 einsteckbar, wodurch die Länge des zweiten Schenkels bei Bedarf einstellbar ist, was nachfolgend noch näher anhand der Darstellung in Fig. 4 erörtert werden wird.

Weitere Elemente des Abstützelements 5 sind eine sich quer zur Fahrzeuglängsrichtung erstreckende Abstützstange 5.3 und ein die Abstützfläche vergrößerndes, sich parallel zur Abstützstange 5.3 erstreckendes Abstützblech 5.4.

Das Rammschutzelement 1 ist schwenkbar um eine fahrzeugfesten Achse A gelagert, die durch an der Fahrzeugfront vorgesehene Zurrösen 6 hindurch verläuft. Aufgrund der Schwenklagerung an den Zurrösen 6 eignet sich das Rammschutzelement 1 auch zur Nachrüstung an bereits im Betrieb befindlichen Fahrzeugen, die ohne größere Umbaumaßnahmen nachträglich mit einem solchen Rammschutzelement 1 versehen werden können.

Durch manuelles Schwenken um die Achse A lässt sich das Rammschutzelement 1 von der in Fig. 1 dargestellten Rammschutzstellung in die in Fig. 2 zusätzlich eingezeichnete Abstützstellung überführen, was nachfolgend anhand der Darstellungen in Fig. 3 und Fig. 4 im Einzelnen erläutert werden wird.

Wie die Darstellung in Fig. 3 zeigt, bildet das Rammschutzelement 1 in der oben dargestellten Rammschutzstellung die vordere Kontur der Fahrzeugperipherie, so dass im Falle einer Kollision das mit dem Fahrzeug kollidierende Hindernis zunächst auf das Rammschutzelement 1 trifft. Das Rammschutzelement 1 ist als stabiles Metallteil ausgebildet, so dass die in Fahrtrichtung hinter dem Rammschutzelement 1 liegenden Karosserieteile im Falle einer Kollision vor dem Hindernis geschützt werden, so beispielsweise die Winde 8, die Scheinwerfer 9 usw.

Im Falle eines Betriebs der Winde 8 ist es für die Standsicherheit des Fahrzeugs von Vorteil, wenn ein zusätzlicher Abstützpunkt im vorderen Bereich des Fahrzeugs, noch vor der Vorderachse 10 des Fahrzeugs, vorgesehen ist. Hierzu ist das Rammschutzelement 1 gemäß der Darstellung in Fig. 3 von der oben eingezeichneten Rammschutzstellung in die weiter unten dargestellte Abstützstellung um die sich im Wesentlichen in horizontaler Richtung quer zum Fahrzeug erstreckende Achse A verschwenkbar. Die Verschwenkung erfolgt durch ein Herunterklappen des Rammschutzelements 1 um etwas mehr als 180° in Richtung der Fahrbahn. Nach einem gewissen Schwenkwinkel liegt der erste, an die Schwenkachse A angebundene Schenkel 2 des Rammschutzelements 1 an einer Schrägfläche 4 des Fahrzeugs, die gegenüber der Fahrbahn geneigt verläuft, an. Sobald das Fahrzeug unter dem Einfluss einer Last zu einer Kippbewegung um die Vorderachse 10 des Fahrzeugs neigt, erfolgt über den Rammschutzbügel 1 und die Fläche 4 eine zusätzliche, sich dieser Kippbewegung entgegen stellende Abstützung.

Wie die Darstellung insbesondere in Fig. 4 erkennen lässt, ist das Rammschutzelement 1 in der Rammschutzstellung über die sog. Hebeösen 7 des Fahrzeugs, die beim Ausführungsbeispiel im Bereich vor der Frontscheibe des Fahrzeugs angeordnet und zur Luftverladung des Fahrzeugs dienen, befestigt. Da diese einen vergleichsweise großen Abstand gegenüber dem ersten Schenkel 2 des Rammschutzelements 1 aufweisen, ist die Länge des zweiten Schenkels 3 einstellbar. Während nämlich in der Rammschutzstellung der zweite Schenkel 3 eine durch den Abstand der Hebeösen vorgegebene Länge L₁ aufweist, ist es in der Abstützstellung erforderlich, den die Länge des zweiten Schenkels 3 durch Teleskopieren entsprechend den Bodengegebenheiten anzupassen, vgl. die Länge L₂ in Fig. 4.

### Bezugszeichen:

- 1: Rammschutzelement
- 2: Schenkel
- 2.1: Holm
- 2.2: Holm
- 3: Schenkel
- 3.1: Holm
- 3.2: Holm
- 4: Abstützfläche
- 5: Abstützelement
- 5.1: Einsteckelement
- 5.2: Einsteckelement#
- 5.3: Abstützstange
- 5.4: Abstützblech
- 6: Zurröse
- 7: Hebeöse
- 8: Winde
- 9: Scheinwerfer
- 10: Vorderachse
- 11: Querverstrebung
- 12: Querverstrebung

- A: Achse
- L₁: Länge
- L₂: Länge

## Patentansprüche

1. Fahrzeug, insbesondere militärisches Fahrzeug, mit einem im Bereich der Fahrzeugfront angeordneten Rammschutzelement (1), das von einer Rammschutzstellung, in welcher das Rammschutzelement (1) die Fahrzeugfront schützt, in eine Abstützstellung überführbar ist, in welcher das Rammschutzelement (1) eine Abstützung des Fahrzeugs gegenüber der Fahrbahn bildet,
**dadurch gekennzeichnet,**
**dass** das Rammschutzelement (1) zwei gegeneinander abgewinkelt verlaufende Schenkel (2, 3) aufweist, wobei das Fahrzeug eine geneigt gegenüber der Fahrbahn verlaufende Abstützfläche (4) aufweist, gegen welche der erste Schenkel (2) des Rammschutzelements (1) in der Abstützstellung anliegt.

2. Fahrzeug nach Anspruch 1, **dadurch gekennzeichnet, dass** das Rammschutzelement (1) durch Verschwenken um eine sich im Wesentlichen in horizontaler Richtung erstreckende Schwenkachse (A) von der Rammschutzstellung in die Abstützstellung überführbar ist.

3. Fahrzeug nach Anspruch 1, **dadurch gekennzeichnet, dass** der erste Schenkel (2) an seinem einen Ende an die Schwenkachse (A) angebunden ist.

4. Fahrzeug nach einem der vorhergehenden Ansprüche, **dadurch gekennzeichnet, dass** die Länge des zweiten Schenkels (3) einstellbar ist.

5. Fahrzeug nach einem der vorhergehenden Ansprüche, **dadurch gekennzeichnet, dass** der zweite Schenkel (3) an seinem freien Ende ein Abstützelement (5) aufweist.

6. Fahrzeug nach einem der vorhergehenden Ansprüche, **dadurch gekennzeichnet, dass** das Rammschutzelement (1) schwenkbeweglich an im Frontbereich des Fahrzeugs vorgesehenen Zurrösen (6) befestigt ist.

7. Fahrzeug nach einem der vorhergehenden Ansprüche, **dadurch gekennzeichnet, dass** das Rammschutzelement (1) in der Rammschutzstellung an Hebeösen (7) des Fahrzeugs befestigt ist.

## Claims

1. A vehicle, in particular a military vehicle, having an impact-protection element (1) which is arranged in the region of the front of the vehicle and can be moved from an impact-protection position, in which the impact-protection element (1) protects the front of the vehicle, into a supporting position in which the vehicle-protection element (1) forms a support for the vehicle with respect to the road,
**characterised in that**,
the impact-protection element (1) has two limbs (2, 3) extending at an angle to one another, wherein the vehicle has a supporting face (4) which extends at an incline with respect to the road and against which the first limb (2) of the impact-protection element (1) abuts in the supporting position.

2. A vehicle according to Claim 1, **characterised in that** the impact-protection element (I) can be moved from the impact-protection position into the supporting position by a pivotal movement about a pivot axis (A) extending in a substantially horizontal direction.

3. A vehicle according to Claim 1, **characterised in that** the first limb (2) is connected at its one end to the pivot axis (A).

4. A vehicle according to one of the preceding claims, **characterised in that** the length of the second limb (3) is adjustable.

5. A vehicle according to one of the preceding claims, **characterised in that** the second limb (3) has a supporting element (5) at its free end.

6. A vehicle according to one of the preceding clams, **characterised in that** the impact-protection element (1) is attached in pivotally moveable manner to tie-down eyes (6) provided in the front region of the vehicle.

7. A vehicle according to one of the preceding claims, **characterised in that**, in the impact-protection position, the impact-protection element (1) is attached to lifting eyes (7) of the vehicle.

## Revendications

1. Véhicule, en particulier véhicule militaire, avec un élément de protection antichocs (1) disposé dans la zone de l'avant du véhicule, qui peut être transféré d'une position de protection antichocs, dans laquelle l'élément de protection antichocs (1) protège l'avant du véhicule, à une position d'appui, dans laquelle l'élément de protection antichocs (1) forme un appui du véhicule par rapport à la chaussée,
**caractérisé en ce que**
l'élément de protection antichocs (1) présente deux branches (2, 3) s'étendant coudées l'une contre l'autre, le véhicule présentant une surface d'appui (4) inclinée par rapport à la chaussée, contre laquelle la première branche (2) de l'élément de protection antichocs (1) repose en position d'appui.

2. Véhicule selon la revendication 1, **caractérisé en ce que** l'élément de protection antichocs (1) peut être déplacée par pivotement d'un axe de pivotement (A) s'étendant sensiblement dans la direction horizontale de la position de protection antichocs à la position d'appui.

3. Véhicule selon la revendication 1, **caractérisé en ce que** la première branche (2) est reliée au niveau d'une extrémité à l'axe de pivotement (A).

4. Véhicule selon l'une quelconque des revendications précédentes, **caractérisé en ce que** la longueur de la seconde branche (3) peut être réglée.

5. Véhicule selon l'une quelconque des revendications précédentes, **caractérisé en ce que** la seconde branche (3) présente un élément d'appui (5) sur son extrémité libre.

6. Véhicule selon l'une quelconque des revendications précédentes, **caractérisé en ce que** l'élément de protection antichocs (1) est fixé de manière mobile en pivotement sur des oeillets d'amarrage (6) prévus dans la zone avant du véhicule.

7. Véhicule selon l'une quelconque des revendications précédentes, **caractérisé en ce que** l'élément de protection antichocs (1) est fixé dans la position de protection antichocs sur des oeillets de levage (7) du véhicule.
